# FASCICULE DE BREVET EUROPEEN

(11) **EP 2 114 840 B1**
(45) Date de publication et mention de la délivrance du brevet: **09.12.2015**
(21) Numéro de dépôt: 07858619.5
(22) Date de dépôt: 18.10.2007
(51) Int. Cl.: C03C 23/00, B23K 26/08, B41M 5/26

(54) **PROCÉDÉ ET INSTALLATION POUR LE MARQUAGE À CHAUD D'OBJETS TRANSLUCIDES OU TRANSPARENTS**
VERFAHREN UND ANLAGE ZUR HEISSMARKIERUNG LICHTDURCHLÄSSIGER ODER DURCHSICHTIGER OBJEKTE
PROCESS AND INSTALLATION FOR THE HOT MARKING OF TRANSLUCENT OR TRANSPARENT OBJECTS

(30) Priorité: 18.10.2006 FR 0654340
(43) Date de publication de la demande: 11.11.2009
(60) Demande divisionnaire: 11165493.5
(73) Titulaire: Tiama, 69390 Vourles (FR)
(72) Inventeur: BATHELET, Guillaume, 69280 Marcy L'Etoile (FR)
(74) Mandataire: Thibault, Jean-Marc
(86) Numéro de dépôt international: PCT/FR2007/052196
(87) Numéro de publication internationale: WO 2008/047058

(56) Documents cités:
- EP-A1- 0 495 647
- WO-A-2004/000749
- JP-A- 9 128 578

## Description

La présente invention concerne le domaine technique du marquage d'articles ou d'objets translucides ou transparents présentant une haute température.

L'objet de l'invention vise plus précisément le marquage à chaud à haute cadence, d'objets creux tels que des bouteilles ou des flacons en verre sortant d'une machine de fabrication ou de formage.

Dans le domaine préféré de la fabrication d'objets en verre, il est connu d'utiliser des systèmes de marquage soit en sortie de la machine de formage soit dans la partie froide du processus de fabrication, afin de réaliser un horodatage en vue d'assurer la traçabilité de la fabrication.

De manière classique, une machine de formage est constituée de différentes cavités équipées chacune d'un moule dans lequel l'objet prend sa forme finale à haute température. En sortie de la machine de formage, les objets sont acheminés de manière à constituer une file sur un convoyeur de transport amenant les objets à défiler successivement devant divers postes de traitement tels que de pulvérisation et de recuit.

Il apparaît intéressant de marquer les objets le plus tôt possible à la sortie de la machine de formage de manière à ne pas créer de décalage temporel dans la détection des défauts susceptibles d'intervenir à la suite d'accumulation d'objets ou à des erreurs dans la traçabilité.

Dans l'état de la technique, diverses solutions ont été proposées pour marquer des objets à haute température sortant d'une machine de formage. Par exemple, le brevet US 4 870 922 décrit un appareil de marquage par pulvérisation contrôlée d'un fluide. La tête de marquage est disposée le long du convoyeur acheminant les objets en sortie de la machine de formage. En pratique, il s'avère que le fluide déposé en surface sous la forme d'un code ou d'un marquage est altéré voire effacé, lors des opérations de manutention, remplissage ou lavage des articles en verre, inhérentes au procédé verrier.

Pour répondre aux problèmes de la tenue du code ou du marquage dans le temps, il est connu notamment par le document JP 09 128 578, d'utiliser un système de marquage par laser qui réalise des marquages ou codes sur la surface des articles, par ablation ou fusion du verre. L'intérêt de cette technologie réside dans le fait que le code est indélébile et résiste très bien aux opérations de manutention, remplissage ou lavage inhérentes au procédé verrier.

Cette technique de marquage laser est également connue pour être mise en oeuvre dans la partie froide du processus de fabrication des objets en verre. Par exemple, le document EP 0 495 647 décrit une installation adaptée pour calculer la vitesse de défilement des objets de manière à assurer un marquage correspondant sur les objets. De même, les documents WO 2004/000749 et US 2003/052100 prévoient de détecter la position de l'objet de l'invention selon sa direction de déplacement avant d'assurer une opération de marquage de l'objet.

Toutefois, ces techniques de marquage laser présentent l'inconvénient de ne pas pouvoir assurer de manière sûre et efficace, l'ablation ou la fusion du verre. En effet, il a été constaté que le laser ne possède pas suffisamment de puissance pour réaliser la fusion du verre, compte tenu que les objets ne se trouvent pas toujours dans le plan de focalisation du laser.

Il peut être envisagé d'aligner les objets en sortie du moule de formage par des mécanismes positionnant les articles en ligne sur le convoyeur, dans la mesure où en sortie de la machine de formage, les articles glissent et ne sont jamais parfaitement alignés. L'utilisation de guides pour aligner des objets est à même de générer des défauts par contact avec les guides ou en créant des contacts entre les objets en verre en les freinant sur le convoyeur. Lorsque ces objets en verre sont à haute température, ces contacts génèrent des défauts puisque le verre à haute température est encore déformable.

L'objet de l'invention vise donc à remédier aux inconvénients de l'art antérieur en proposant une installation adaptée pour assurer en sortie d'une machine de formage, un marquage efficace par laser d'objets tout en ne risquant pas de dégrader les objets lors de leur convoyage jusqu'au poste de marquage.

Pour atteindre un tel objectif, l'objet de l'invention concerne une installation pour marquer, en sortie d'une machine de formage, des objets transparents ou translucides défilant en translation successivement devant un poste de marquage, conforme la revendication 1.

Une telle installation permet d'éviter la mise en oeuvre de mécanisme de positionnement en sortie de la machine de formage tout en optimisant le procédé de marquage par laser.

Un autre inconvénient de la technique antérieure réside dans le fait que l'opération de marquage ne permet pas d'encoder de manière sûre le numéro de moule sur chaque objet compte tenu des erreurs dans la traçabilité dues par exemple à des accumulations ou à des casses d'objets.

La présente invention vise donc à remédier à cet inconvénient en proposant une technique permettant de marquer à coup sûr, sur chaque objet, une information dépendante de la cavité de formage de chacun desdits objets.

Pour atteindre un tel objectif, l'installation comporte des moyens de synchronisation avec une machine de formage, reliés au poste de marquage de manière à réaliser sur chaque objet, un marquage donnant au moins une information, dépendante de la cavité de formage de chacun des objets.

Selon un exemple de réalisation, le poste de marquage réalise sur chaque objet, un marquage donnant au moins une information sur le numéro du moule ou de la cavité d'origine de formage.

Selon un autre exemple de réalisation, le poste de marquage réalise sur chaque objet un marquage donnant au moins une information temporelle sur le moment de la formation des objets.

Selon un autre exemple de réalisation, le poste de marquage réalise, sur chaque objet, un marquage donnant au moins une information sur la machine de formage, la ligne de fabrication et/ou l'usine de fabrication.

Selon un autre exemple de réalisation, le poste de marquage réalise, sur chaque objet, un marquage donnant une identification unique pour chacun des objets.

Par exemple, les moyens de détermination de la position des objets sont des moyens optiques.

Un autre objet de l'invention est de proposer un procédé pour marquer, à la sortie d'une machine de formage, à l'aide d'un faisceau laser, des objets transparents ou translucides défilant en translation successivement devant un poste de marquage. Le procédé est conforme à la revendication 7.

Selon une caractéristique avantageuse de réalisation, le procédé consiste à réaliser, sur chaque objet, un marquage à partir d'au moins une des informations suivantes : numéro du moule ou de la cavité d'origine, machine de formage, ligne de fabrication, usine de fabrication, date de fabrication.

Selon une caractéristique préférée de réalisation, le procédé consiste à réaliser, sur chaque objet, un marquage donnant une identification unique pour chaque objet.

Avantageusement, le procédé consiste à réaliser, sur chaque objet, un marquage à partir d'au moins une des informations suivantes : numéro du moule ou de la cavité d'origine, machine de formage, ligne de fabrication, usine de fabrication, date de fabrication.

Par exemple, le procédé consiste à réaliser sur chaque objet un marquage codé.

Diverses autres caractéristiques ressortent de la description faite ci-dessous en référence aux dessins annexés qui montrent, à titre d'exemples non limitatifs, des formes de réalisation de l'objet de l'invention.

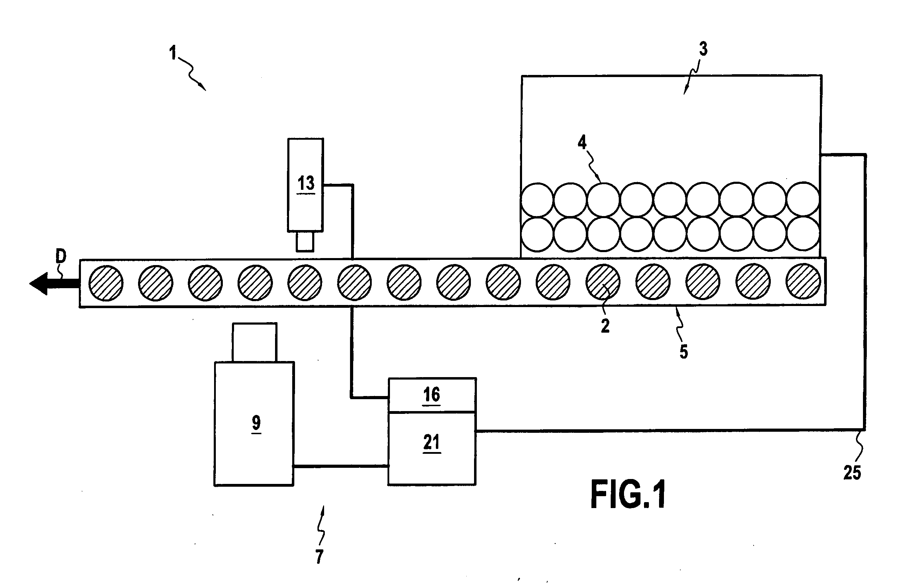

La **Figure 1** est une vue schématique illustrant un exemple de réalisation d'une installation de marquage conforme à l'invention.
Les **Figures 2** et **3** sont des vues respectivement de dessus et en perspective montrant des caractéristiques de l'installation conforme à l'invention.

L'objet de l'invention concerne une installation **1** permettant de marquer ou de graver à chaud des objets **2** par exemple creux transparents ou translucides tels que par exemple des bouteilles ou des flacons en verre.

L'installation **1** est placée de manière à assurer le marquage des objets **2** sortant d'une machine de fabrication ou de formage **3** et présentant ainsi chacun une haute température. La machine de formage **3** comporte de manière classique, une série de cavités **4** assurant chacune le formage d'un objet **2.** De manière connue, les objets **2** qui viennent d'être formés par la machine **3** constituent une file sur un convoyeur de sortie **5** de sorte que les objets **2** constituent une file sur le convoyeur **5.** Les objets **2** sont ainsi acheminés les uns à la suite des autres à différents postes de traitement selon un sens de défilement **D** de la direction **x.** Les objets se déplacent ainsi dans un plan défini par les axes **x, y.**

Conformément à l'invention, l'installation **1** pour marquer à chaud les objets **2** comporte un poste de marquage **7** placé au plus près en sortie de la machine de formage **3.** Le poste de marquage **7** est ainsi placé le plus près possible de la machine de formage **3** sur le trajet du convoyeur **5** qui assure ainsi le défilement successif devant le poste de marquage **7** selon le sens de défilement **D,** des objets **2** à haute température.

Le poste de marquage **7** comporte un appareil **9** de production d'un faisceau laser **11.** Un tel appareil laser **9** ne sera pas décrit plus précisément dans la mesure où il est bien connu de l'homme du métier.

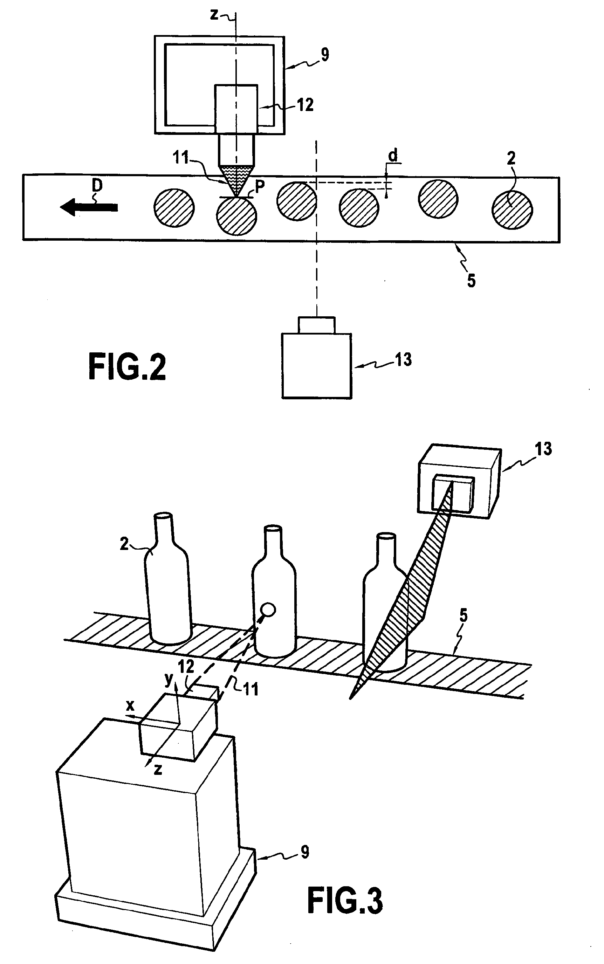

Selon une caractéristique avantageuse de l'invention illustrée plus particulièrement aux **figures 2** et **3****,** cet appareil laser **9** comporte des moyens de déplacement **12** du plan de focalisation **P** du faisceau laser **11.** En d'autres termes, l'appareil laser **9** comporte des moyens pour réaliser des corrections optiques de manière à déplacer la position du plan de travail **P** du laser transversalement par rapport à la direction **D** de défilement des objets, c'est-à-dire dans l'exemple illustré, perpendiculaire au plan défini par les axes **x, y.** Par exemple, l'appareil laser **12** comporte en tant que moyens de déplacement **12,** un système optique motorisé piloté en déplacement.

Dans l'exemple illustré, le faisceau laser **11** présente une direction sensiblement perpendiculaire à la direction de convoyage **D** c'est-à-dire perpendiculaire au plan défini par les axes **x, y.** Bien entendu, il peut être envisagé que le faisceau laser **11** présente une direction transversale différente d'une direction perpendiculaire telle qu'inclinée par rapport à la direction de convoyage **D.** En tout état de cause, les moyens **12** assurent le déplacement du plan de focalisation **P** du faisceau laser **11**, selon une direction transversale **z** par rapport à la direction de convoyage **D,** c'est-à-dire selon une direction **z** qui coupe cette direction de convoyage **D.**

L'installation **1** comporte également des moyens **13** de détermination de la position de chacun des objets **2** selon au moins une direction **z** transversale à la direction de défilement **D** des objets. En d'autres termes, ces moyens **13** permettent de détecter le décalage transversal **d** des objets par rapport à la direction de défilement **D** des objets. Les moyens **13** permettent ainsi de déterminer la position selon l'axe **z** de chaque objet **2** par rapport à l'appareil laser **9.**

Selon une caractéristique de l'objet de l'invention, ces moyens de détermination **13** sont placés en amont du poste de marquage par rapport au sens de défilement. Dans l'exemple illustré aux **figures 2** et **3****,** les moyens de détermination **13** sont constitués par une caméra infrarouge de type linéaire disposée sur le côté de convoyeur **5** en surélévation pour permettre de mesurer la position en profondeur des objets sur le convoyeur. Cette caméra est sensible aux rayonnements infrarouges émis par les objets **2** encore à haute température après formage. La caméra est disposée en surélévation par rapport au convoyeur de façon à former un angle non nul par rapport à l'horizontal. De plus, le champ de la caméra est perpendiculaire au sens de défilement **D** des objets. Lorsque les objets **2** sont décalés sur le convoyeur **5** selon l'axe **z,** leur position dans le champ de la caméra change. La caméra **13** génère un signal de sortie par exemple vidéo en réponse au rayonnement infrarouge émis par les objets **2.**

Une telle caméra **13** est reliée à une unité **16** de contrôle et de traitement des signaux de sortie délivrés par la caméra. Les images prisent par la caméra sont analysées par l'unité lors d'une étape de traitement pour déterminer la position des objets **2,** par exemple par triangulation. Bien entendu, l'unité de contrôle et de traitement **16** est adaptée pour piloter le fonctionnement de la caméra lors du passage d'un objet **2** dans son champ de vision de manière que la caméra prenne une image de chacun des objets **2** défilant à haute cadence.

L'installation **1** comporte également les moyens **21** permettant de piloter les moyens de déplacement **12** de l'appareil laser **9.** Ces moyens de pilotage **21** sont reliés aux moyens de détermination de la position des objets à savoir, à l'unité **16** de contrôle et de traitement des signaux sortant de la caméra. Ces moyens de pilotage **21** permettent ainsi d'adapter en fonction de la position des objets à marquer, le plan de focalisation **P** du faisceau laser de manière que ce dernier puisse, lorsque les objets passent devant l'appareil **9,** assurer un marquage convenable des objets.

Le fonctionnement de l'installation **1** conforme à l'invention découle directement de la description qui précède. Lors du passage des objets **2** devant la caméra **13,** les objets **2** sont détectés et leur position sur le convoyeur selon l'axe **z** est mesurée. Après le passage de l'objet devant la caméra et avant son passage devant l'appareil laser **9,** la mesure de la position de l'objet sur le convoyeur est transmise aux moyens de pilotage **21** qui calculent les corrections optiques à apporter éventuellement au laser et pilotent en conséquence le système optique motorisé interne à l'appareil laser **9.** Le plan focal ou de travail **P** du faisceau laser est donc adapté à la position de l'objet avant son passage devant l'appareil laser **9.** Les moyens de déplacement **12** sont tels que l'appareil laser **9** travaille dans un plan où le faisceau laser a suffisamment de puissance pour réaliser la fusion ou l'ablation de matière sur l'objet **2** lors du marquage. Les moyens de déplacement **12** déplacent le plan de focalisation **P** du faisceau laser pour ainsi optimiser le marquage réalisé sur l'objet.

Il doit donc être compris que le procédé selon l'invention comporte une étape de détermination avant leur marquage, de la position des objets, selon une direction **z** transversale à la direction au sens de défilement **D** des objets et une étape d'adaptation du plan de focalisation **P** du faisceau laser **11** en fonction de la position des objets à marquer de manière qu'ensuite, le faisceau laser puisse assurer une opération de marquage des objets passant devant le faisceau laser **11.** L'opération de marquage est donc assurée par le faisceau laser **11** dont la position du plan de focalisation **P** a été préalablement optimisée pour assurer le marquage des objets. Il est à noter que ce procédé est mis en oeuvre pour chaque objet défilant devant le poste de marquage **7.** Bien entendu, l'étape d'adaptation du plan de focalisation **P** peut être facultative dans le cas où deux objets consécutifs occupent la même position transversale sur le convoyeur.

L'objet de l'invention vise donc à agir directement sur l'optique de l'appareil laser **9** afin d'asservir le plan de focalisation ou de travail **P** du faisceau laser à la position des objets **2** sur le convoyeur **5** pour obtenir une intensité laser suffisante pour réaliser l'opération de marquage. Bien entendu, il peut être prévu de déplacer selon l'axe **z** l'appareil laser **9.**

Bien entendu, il est possible de mesurer la position des objets sur le convoyeur par diverses autres méthodes. Par exemple, il peut être utilisé un système par ultrasons, radar, capacitif ou inductif qui mesure la distance directe entre le capteur et la surface de l'objet. Les mesures qui évoluent au fur et à mesure du défilement des objets **2** sur le convoyeur sont transmises à l'unité de traitement. Une autre technique consiste à utiliser une caméra et une source de lumière. Dans cette technique, chaque objet génère un contraste lors de son passage devant la source lumineuse. La position de l'objet dans le champ de la caméra est analysée et permet de mesurer ainsi la position des objets sur le convoyeur selon l'axe **z.** Une autre méthode consiste à utiliser un émetteur et un récepteur laser qui par triangulation permet de mesurer la distance directe entre le capteur et la surface de l'objet.

Selon une autre caractéristique avantageuse de l'objet de l'invention, l'installation **1** comporte des moyens **25** de synchronisation entre l'unité de contrôle **21** et la machine de formage **1** de manière que pour chaque objet **2** passant devant le poste de marquage, il peut être connu la cavité d'où l'objet provient. Ainsi, la mesure de la position et la détection de la présence des objets **2** est synchronisée avec la machine de formage **1.** En d'autres termes, pour chaque cavité, il est évalué la position sur le convoyeur, de l'objet **2** issu des cavités. Dans la mesure où l'installation permet de synchroniser l'appareil laser **9** avec la machine de formage **3,** il peut être envisagé de réaliser sur chaque objet, un marquage donnant au moins une information dépendante de la cavité d'origine de formage. Ainsi, il peut être prévu de marquer par exemple le numéro du moule ou de la cavité d'origine de formage.

Il est à noter que le poste de marquage **7** peut réaliser, sur chaque objet **2,** un marquage donnant une information, par exemple sur la machine de formage, la ligne de fabrication et/ou l'usine de fabrication.

Avantageusement, le poste de marquage **7** réalise sur chaque objet **2,** un marquage donnant au moins une information temporelle sur le moment de la formation des objets. Ainsi, le poste de marquage **7** peut assurer un horodatage à partir de l'une et/ou l'autre de ces informations telles que, la date de fabrication, l'heure, minutes et secondes de la fabrication.

Selon une autre caractéristique avantageuse de réalisation, le poste de marquage **7** réalise, sur chaque objet **2,** un marquage donnant une identification unique pour chacun des objets. En d'autres termes, chaque objet **2** porte un code ou un marquage différent des autres codes ou marquages portés par les autres objets. Ce code d'identification unique peut avantageusement être obtenu à partir de l'une et/ou de l'autre des informations suivantes : date, heure, minute, seconde de la fabrication, numéro de moule ou de cavité, référence de la machine de formage, de la ligne de fabrication, de l'usine de fabrication, etc.

Il est à noter que chaque marquage peut être réalisé en alphanumérique ou par un codage spécifique directement lisible ou crypté. Par exemple, le marquage peut être réalisé sous la forme d'un code data matrix facilitant les opérations de relecture en automatique.

## Revendications

1. Installation pour marquer, en sortie d'une machine de formage **(3),** des objets transparents ou translucides défilant en translation successivement devant un poste de marquage **(7)** comportant un appareil **(9)** de production d'un faisceau laser **(11)** pour assurer un marquage des objets, cet appareil comportant des moyens **(12)** de déplacement du plan de focalisation **(P)** du faisceau laser, selon une direction transversale **(z)** par rapport à la direction de défilement **(D),** ces moyens de déplacement **(12)** étant pilotés par des moyens de pilotage **(21) caractérisée en ce qu'**elle comporte des moyens de détermination **(13)** constitués par une caméra linéaire sensible aux rayonnements infrarouges permettant de mesurer la position de chacun des objets selon au moins une direction **(z)** transversale à la direction de défilement **(D)** des objets, ces moyens **(13)** étant placés en amont du poste de marquage par rapport au sens de défilement, et **en ce que** les moyens **(21)** de pilotage des moyens de déplacement **(12)** sont reliés aux moyens de détermination **(13),** et permettent d'adapter, en fonction de la mesure de la position de chaque objet à marquer, le plan de focalisation **(P)** du faisceau laser pour optimiser le marquage des objets par le faisceau laser **(11).**

2. Installation selon la revendication 1, **caractérisée en ce qu'**elle comporte des moyens **(25)** de synchronisation avec une machine de formage **(3),** reliés au poste de marquage **(7)** de manière à réaliser sur chaque objet, un marquage donnant au moins une information, dépendante de la cavité de formage de chacun des objets.

3. Installation selon la revendication 1 ou 2, **caractérisée en ce qu'**elle comporte des moyens **(25)** de synchronisation avec une machine de formage **(3),** reliés au poste de marquage **(7)** de manière que le poste de marquage **(7)** réalise sur chaque objet, un marquage donnant au moins une information sur le numéro du moule ou de la cavité d'origine de formage.

4. Installation selon l'une des revendications 1 à 3, **caractérisée en ce qu'**elle comporte des moyens **(25)** de synchronisation avec une machine de formage **(3),** reliés au poste de marquage **(7)** de manière que le poste de marquage **(7)** réalise sur chaque objet un marquage donnant au moins une information temporelle sur le moment de la formation des objets.

5. Installation selon l'une des revendications 1 à 4, **caractérisée en ce qu'**elle comporte des moyens **(25)** de synchronisation avec une machine de formage **(3),** reliés au poste de marquage **(7)** de manière que le poste de marquage **(7)** réalise, sur chaque objet, un marquage donnant au moins une information sur la machine de formage, la ligne de fabrication et/ou l'usine de fabrication.

6. Installation selon l'une des revendications 1 à 5, **caractérisée en ce qu'**elle comporte des moyens **(25)** de synchronisation avec une machine de formage **(3),** reliés au poste de marquage **(7)** de manière que le poste de marquage **(7)** réalise, sur chaque objet, un marquage donnant une identification unique pour chacun des objets.

7. Procédé pour marquer en sortie d'une machine de formage **(3)** à l'aide d'un faisceau laser **(11),** des objets **(2)** transparents ou translucides défilant en translation successivement devant un poste de marquage **(7), caractérisé en ce qu'**il comporte les étapes suivantes :
- mesurer, à l'aide d'une caméra linéaire sensible aux rayonnements infrarouges émis par les objets **(2),** avant le marquage desdits objets, la position de chaque objet selon au moins une direction **(z)** transversale par rapport à la direction de défilement **(D)** des objets,
- à déplacer selon la direction transversale **(z)** le plan de focalisation **(P)** du faisceau laser en fonction de la position de ces objets à marquer pour optimiser l'opération ultérieure de marquage des objets défilant devant le faisceau laser,
- et à réaliser sur chaque objet, un marquage par le faisceau laser **(11)** dont la position du plan de focalisation **(P)** a été optimisée pour assurer le marquage.

8. Procédé selon la revendication 7, **caractérisé en ce qu'**il consiste à synchroniser le poste de marquage **(7)** à la machine de formage **(3)** des objets de manière à réaliser, sur chaque objet, un marquage donnant au moins une information sur la cavité de formage de chacun des objets.

9. Procédé selon la revendication 7 ou 8, **caractérisé en ce qu'**il consiste à synchroniser le poste de marquage **(7)** à la machine de formage **(3)** des objets de manière à réaliser, sur chaque objet, un marquage donnant une identification unique pour chaque objet.

10. Procédé selon l'une des revendications 7 à 9, **caractérisé en ce qu'**il consiste à synchroniser le poste de marquage **(7)** à la machine de formage **(3)** des objets de manière à réaliser, sur chaque objet, un marquage à partir d'au moins une des informations suivantes : numéro du moule ou de la cavité d'origine, machine de formage, ligne de fabrication, usine de fabrication, date de fabrication.

11. Procédé selon l'une des revendications 7 à 10, **caractérisé en ce qu'**il consiste à réaliser sur chaque objet un marquage codé.

## Patentansprüche

1. Anlage, um am Ausgang einer Formungsmaschine (3) durchsichtige oder lichtdurchlässige Gegenstände zu markieren, die nacheinander in Translation vor einer Markierungsstation (7) ablaufen, umfassend ein Gerät (9) zur Erzeugung eines Laserstrahls (11), um eine Markierung der Gegenstände zu gewährleisten, wobei dieses Gerät Mittel (12) zur Verschiebung der Fokussierungsebene (P) des Laserstrahls in eine Querrichtung (z) in Bezug zur Ablaufrichtung (D) umfasst, wobei dies Verschiebemittel (12) von Steuermitteln (21) gesteuert werden, **dadurch gekennzeichnet, dass** sie Bestimmungsmittel (13) umfasst, die von einer für Infrarotstrahlen empfindlichen linearen Kamera gebildet sind, die es ermöglicht, die Position jedes der Gegenstände entlang mindestens einer Querrichtung (z) zur Ablaufrichtung (D) der Gegenstände zu messen, wobei diese Mittel (13) stromaufwärts zu der Markierungsstation in Bezug zur Ablaufrichtung angeordnet sind, und dass die Steuermittel (21) der Verschiebemittel (12) mit den Bestimmungsmitteln (13) verbunden sind und es ermöglichen, in Abhängigkeit von der Messung der Position jedes zu kennzeichnenden Gegenstandes die Fokussierungsebene (P) des Laserstrahls anzupassen, um die Markierung der Gegenstände durch den Laserstrahl (11) zu optimieren.

2. Anlage nach Anspruch 1, **dadurch gekennzeichnet, dass** sie Synchronisierungsmittel (25) mit einer Formungsmaschine (3) umfasst, die an der Markierungsstation (7) vorgesehen sind, um auf jedem Gegenstand eine Markierung durchzuführen, die mindestens eine Information liefert, die vom Formungshohlraum jedes der Gegenstände abhängig ist.

3. Anlage nach Anspruch 1 oder 2, **dadurch gekennzeichnet, dass** sie Synchronisierungsmittel (25) mit einer Formungsmaschine (3) umfasst, die mit der Markierungsstation (7) verbunden sind, so dass die Markierungsstation (7) auf jedem Gegenstand eine Markierung durchführt, die mindestens eine Information über die Nummer der Form oder den ursprünglichen Formungshohlraum liefert.

4. Anlage nach einem der Ansprüche 1 bis 3, **dadurch gekennzeichnet, dass** sie Synchronisierungsmittel (25) mit einer Formungsmaschine (3) umfasst, die mit der Markierungsstation (7) verbunden sind, so dass die Markierungsstation (7) auf jedem Gegenstand eine Markierung durchführt, die mindestens eine zeitliche Information über die Formung der Gegenstände liefert.

5. Anlage nach einem der Ansprüche 1 bis 4, **dadurch gekennzeichnet, dass** sie Synchronisierungsmittel (25) mit einer Formungsmaschine (3) umfasst, die mit der Markierungsstation (7) verbunden sind, so dass die Markierungsstation (7) auf jedem Gegenstand eine Markierung durchführt, die mindestens eine Information über die Formungsmaschine, die Herstellungslinie und/oder das Herstellungswerk liefert.

6. Anlage nach einem der Ansprüche 1 bis 5, **dadurch gekennzeichnet, dass** sie Synchronisierungsmittel (25) mit einer Formungsmaschine (3) umfasst, die mit der Markierungsstation (7) verbunden sind, so dass die Markierungsstation (7) auf jedem Gegenstand eine Markierung durchführt, die eine einzigartige Identifikation für jeden der Gegenstände liefert.

7. Verfahren, um am Ausgang einer Formungsmaschine (3) mit Hilfe eines Laserstrahls (11) durchsichtige oder lichtdurchlässige Gegenstände (2) zu markieren, die nacheinander in Translation vor einer Markierungsstation (7) ablaufen, **dadurch gekennzeichnet, dass** es die folgenden Schritte umfasst:
- vor dem Markieren der Gegenstände Messen mit Hilfe einer für die von den Gegenständen (2) entsandten Infrarotstrahlen empfindlichen linearen Kamera der Position jedes Gegenstandes in mindestens eine Querrichtung (z) in Bezug zur Ablaufrichtung (D) der Gegenstände,
- Verschieben der Fokussierungsebene (P) des Laserstrahls entlang der Querrichtung (z) in Abhängigkeit von der Position dieser zu markierenden Gegenstände, um den späteren Vorgang der Markierung der vor dem Laserstrahl ablaufenden Gegenstände zu optimieren,
- und auf jedem Gegenstand Durchführen einer Markierung durch den Laserstrahl (11), dessen Position der Fokussierungsebene (P) optimiert wurde, um die Markierung zu gewährleisten.

8. Verfahren nach Anspruch 7, **dadurch gekennzeichnet, dass** es darin besteht, die Markierungsstation (7) mit der Formungsmaschine (3) der Gegenstände zu synchronisieren, um auf jedem Gegenstand eine Markierung durchzuführen, die mindestens eine Information über den Formungshohlraum jeden der Gegenstände liefert.

9. Verfahren nach Anspruch 7 oder 8, **dadurch gekennzeichnet, dass** es darin besteht, die Markierungsstation (7) mit der Formungsmaschine (3) der Gegenstände zu synchronisieren, um auf jedem Gegenstand eine Markierung durchzuführen, die eine einzigartige Identifikation für jeden Gegenstand liefert.

10. Verfahren nach einem der Ansprüche 7 bis 9, **dadurch gekennzeichnet, dass** es darin besteht, die Markierungsstation (7) mit der Formungsmaschine (3) der Gegenstände zu synchronisieren, um auf jedem Gegenstand eine Markierung aus mindestens einer der folgenden Informationen durchzuführen: Nummer der ursprünglichen Form oder des Formungshohlraums, Formungsmaschine, Herstellungslinie, Herstellungswerk, Herstellungsdatum.

11. Verfahren nach einem der Ansprüche 7 bis 10, **dadurch gekennzeichnet, dass** es darin besteht, auf jedem Gegenstand eine codierte Markierung durchzuführen.

## Claims

1. ain installation for marking transparent or translucent objects leaving a forming machine (3), these objects successively travelling in translation in front of a marking station (7) comprising apparatus (9) to produce a laser beam (11) to ensure marking of the objects, said apparatus comprising means (12) to move the focusing plane (P) of the laser beam, in a transverse direction (z) relative to the direction of travel (D), with said moving means (12) being guided by the guiding means (21), the installation being **characterized in that** it comprises determining means (13) consisting of a linear camera that is sensitive to infrared radiation so that it can measure the position of each of the objects in at least one direction (z) transverse to the direction of travel (D) of the objects, these means (13) being positioned upstream of the marking station relative to the direction of travel, and **in that** the means (21) to guide the moving means (12) are linked to the determining means (13) and, in relation to the position measurement of each object to be marked, allow the focusing plane (P) of the laser beam to be adapted to optimize marking of the objects by the laser beam (11).

2. An installation according to claim 1, **characterized in that** it comprises means (25) to synchronize with a forming machine (3), linked to the marking station (7), so as to obtain marking on each object giving at least one item of information related to the forming cavity of each of the objects.

3. An installation according to claim 1 or claim 2, **characterized in that** it comprises means (25) to synchronize with a forming machine (3), linked to the marking station (7), so that the marking station (7) produces marking on each object which gives at least one item of information on the mould number or originating forming cavity.

4. An installation according to any one of claims 1 to 3, **characterized in that** it comprises means (25) to synchronize with a forming machine (3), linked to the marking station (7), so that the marking station (7) produces a marking on each object giving at least one time information on the time of formation of the objects.

5. An installation according to any one of claims 1 to 4, **characterized in that** it comprises means (25) to synchronize with a forming machine (3), linked to the marking station (7), so that the marking station (7) produces a marking on each object giving at least one item of information on the forming machine, the production line and/or the production factory.

6. An installation according to any one of claims 1 to 5, **characterized in that** it comprises means (25) to synchronize with a forming machine, (3) linked to the marking station (7), so that the marking station (7) produces marking on each object giving a unique identification for each of the objects.

7. A marking method using a laser beam (11) at the exit of a forming machine (3), to mark transparent or translucent objects (2) successively travelling in translation in front of a marking station (7), the method being **characterized in that** it comprises the following steps:
- measuring, using a linear camera that is sensitive to the infrared radiation emitted by the objects (2), before said objects are marked, the position of each object in at least one transverse direction (z) relative to the direction of travel (D) of the objects;
- moving the focusing plane (P) of the laser beam in the transverse direction (z) relative to the position of these objects to be marked, to optimize the subsequent marking operation of the objects travelling in front of the laser beam; and
- producing a marking on each object by means of the laser beam (11) whose focusing plane (P) has been optimally positioned to ensure marking.

8. A method according to claim 7, **characterized in that** it consists of synchronizing the marking station (7) with the machine (3) forming the objects, so that marking is obtained on each object giving at least one item of information on the forming cavity of each of the objects.

9. A method according to claim 7 or claim 8, **characterized in that** it consists of synchronizing the marking station (7) with the machine (3) forming the objects, so that marking is produced on each object giving a unique identification for each object.

10. A method according to any one of claims 7 to 9, **characterized in that** it consists of synchronizing the marking station (7) with the machine (3) forming the objects, so as to obtain marking on each object based on at least one of the following data items: mould number or originating cavity, forming machine, production line, production factory, date of manufacture.

11. A method according to any one of claims 7 to 10, **characterized in that** it consists of producing coded marking on each object.
